# EUROPEAN PATENT APPLICATION

(11) **EP 0 664 527 A1**
(43) Date of publication of application: **26.07.1995**
(21) Application number: 94420365.2
(22) Date of filing: 20.12.1994
(51) Int. Cl.: G06T 17/40, G06T 15/70

(54) **Method and apparatus for standardizing facial images for personalized video entertainment**

(30) Priority: 30.12.1993 US 175813
(71) Applicant: EASTMAN KODAK COMPANY, Rochester, New York 14650-2201 (US)
(72) Inventor: Ellson, Richard N. c/o EASTMAN KODAK COMPANY, Rochester, New York 14650-2201 (US); Parulski, Kenneth A. c/o EASTMAN KODAK COMPANY, Rochester, New York 14650-2201 (US); Baumeister, Hans Peter, c/o EASTMAN KODAK COMPANY, Rochester, New York 14650-2201 (US)
(74) Representative: Boulard, Denis

(57) **Abstract**

The present invention addresses the need for more personalization of interactive video entertainment by describing a system for capturing, previewing, feature identifying, standardizing and storing of portrait-type images on a storage media suitable for use as an input means for interactive video entertainment. The present invention provides the advantages of enabling a customer to select and write images onto a storage media which can be accessed by interactive video entertainment software. Further, this format will provide information to the interactive video software suitable for character animation of the person's face depicted in the image or a hybridization of the individual's facial image with another facial image.

## Description

### Cross-Reference To Related Applications

This application is related to U.S. Patent Application Serial No. 175,206, entitled "Method And Apparatus For Producing 'Personalized' Video Games Using CD Discs" filed on even date herewith by K. Parulski et al.

### Field of Invention

The present invention relates to the field of digital image processing, and more particularly to capturing, previewing, feature identification, standardization and storage of portrait-type images on a storage media suitable for use as an input means for animation of the facial images in an interactive video entertainment system.

### Background Of The Invention

There is a desire to personalize many consumer items. For example, monograms have long been a popular means of personalization for china, shirts and luggage. The use of the image of an individual can add much appeal to an object, and images now personalize many everyday items such as coffee mugs, T-shirts and credit cards.

Another commonplace product ripe for personalization via imaging is the interactive video entertainment market. This has become a large industry with game consoles in over 60% of U.S. households. To date, users of video entertainment have often been limited in their ability to personalize their interactive video entertainment to the selection of the name of their persona in the system and perhaps a selection of their appearance from a short predefined list.

The graphics and animation capability of many interactive video systems has steadily improved. These systems are increasingly capable of manipulating image data bases and graphical object rendering. Most current interactive video entertainment "games" are stored on cartridges, with 102 million sold in 1992 alone. The demand for better graphics is pushing the industry to larger data volumes for each game unit, and the distribution vehicle of some game units has become the Compact Disc ROM (CD-ROM), having hundreds of megabytes of capacity. Sega, a major player in the interactive video entertainment market with annual sales over $2 billion, expects to sell a million CD-ROM based games in 1993.

With the increased storage capacity of the game distribution vehicle, the potential for distributing personalized image data in conjunction with the game is possible. Image data such as a portrait image could be captured by digital imaging devices such as an electronic still camera like the Professional DCS 200 Digital Camera System from Eastman Kodak of Rochester, New York, or the CCD 4000 RGB Flash-Sync Cameras also from Kodak. These images could then be written to the CD-ROM by a CD-ROM writer such as the Kodak Photo CD 2X Writer using the process described by the cross-referenced application by Parulski, Baumeister and Ellson, entitled "Method And Apparatus For Producing 'Personalized' Video Games Using CD Discs."

Once portrait image information is made available to the interactive video entertainment system, it will be used to create animation of the personalized characters or of hybrid characters which mix the features of personalized portraits and those provided by the system as "authored" portraits. This is accomplished through the application of image warping and metamorphosis techniques, more commonly known as "morphing". Morphing requires knowledge of the correspondence of feature points in a starting image with feature points in an ending image in order to calculate smooth interpolations of the intermediate images. These techniques were used by Pacific Data Images of Sunnyvale, California, to generate the special effects in the Michael Jackson music video, "Black or White" (see T. Beier and S. Neely, "Feature-Based Image Metamorphosis", Computer Graphics, Vol. 26, No. 2, July, 1992, pp. 35-42). Software tools for digital image metamorphosis are available from many companies including A-Morph from KOZMO, Ltd. of Budapest and MORPH 1.0 from Gryphon Software Corp. of San Diego, California. The morphing technology can generate a fictional face by blending the face of one person with another person's image by stopping in between the two endpoint digital images. For example, a child's image could be hybridized with the face of their best friend or with one of the faces provided on the CD-ROM.

Human-driven, computer-generated character animation enables human actors to generate animation sequences of cartoon characters. This technique has been used on the Super Mario Brothers cartoon program. It operates by tracking feature points on a human actor by three-dimensional position sensor transmitter/receiver system such as The Bird from Ascension Technology Corp., of Burlington, Vermont. The real-time motion of the feature points in three-dimensional space are recorded over time for a given behavior such as a laughing or yawning by the human actor. The motion of the feature points are used to drive a feature based metamorphosis of the cartoon character's model.

The present invention addresses the need for more personalization of interactive video entertainment by describing a system for capturing, previewing, feature identifying, standardizing and storing of portrait-type images on a storage media suitable for use as an input means for interactive video entertainment. The present invention provides the advantages of enabling a customer to select and write images onto a storage media which can be accessed by interactive video entertainment software. Further, this format will provide information to the interactive video software suitable for character animation of the person's face depicted in the image or a hybridization of the individual's facial image with another facial image.

### Summary Of The Invention

There is a perceived need for more personalization of interactive video entertainment. One method of personalization is to incorporate images supplied by the user of the interactive video device. The present invention addresses this need as it describes a system for capturing, previewing, feature identifying, standardizing and storing of portrait-type images on a storage media suitable for use as an input means for personalized interactive video entertainment.

The present invention provides the advantages of enabling a customer to select and write images onto a storage media which can be accessed by interactive video entertainment software. Further, this format will provide information to the interactive video software suitable for character animation of the person's face depicted in the image or a hybridization of the individual's facial image with another facial image.

A preferred method embodiment of the present invention for standardizing images for video games and the like comprises the steps of:
a) forming a template of a standard video character;
b) forming a personalized image;
c) locating corresponding feature points in the personalized image with corresponding template feature points;
d) storing the locations of corresponding feature points and associated personalized image; and
e) repeating steps a through d for each standard video character and personalized image.

In a preferred system implementation of the invention there is provided a system for standardizing images for video games and the like comprising:
means for forming a template of a standard video character;
means for forming a personalized image;
means for locating corresponding feature points in the personalized image with corresponding template feature points; and
means for storing the locations of corresponding feature points and associated personalized image.

From the foregoing it can be seen that a primary object of the present invention is enable a smooth animation of portraits.

Another object of the present invention is to provide a technique for smoothly animating video game characters.

Yet another object of the present invention is the provision of a technique for producing video game characters from the combination of personalized (portraits) and authored images.

The above and other objects of the present invention will become more apparent when taken in conjunction with the following description and drawings wherein like characters indicate like parts and which drawings form a part of the present invention.

### Brief Description Of The Drawings

Figure 1 illustrates in block diagram form a system for capturing and writing personalized images for use on video game discs.

Figure 2 illustrates in block diagram form an apparatus for locating feature points in a personalized portrait with corresponding feature points in a reference portrait.

Figures 3A, 3B, and 3C illustrate three sample screen display images from video games, representing a standard game image, a personalized image and a hybrid image composed from a standard and a personalized image.

### Detailed Description Of The Invention

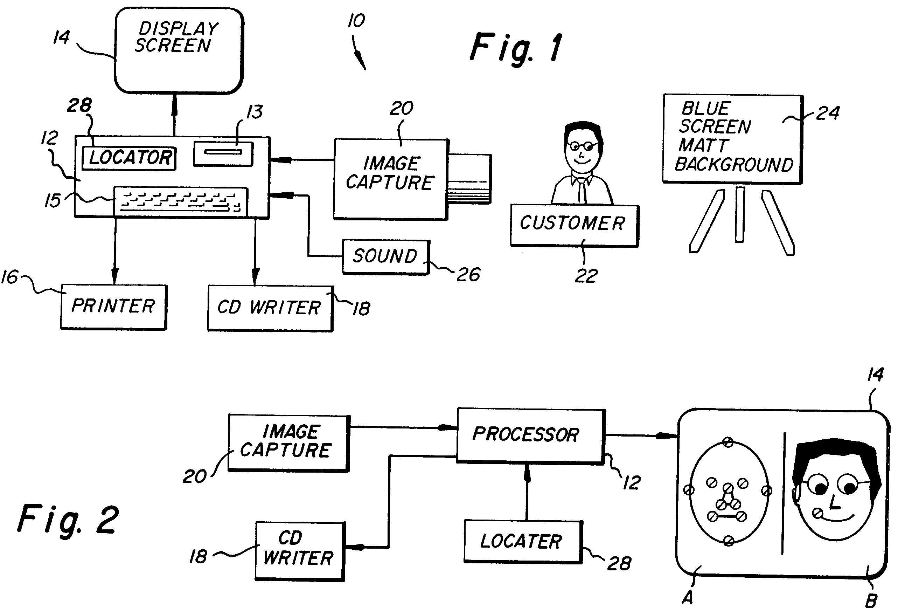

Figure 1 illustrates an apparatus embodiment 10 comprised of; an image capture means 20, a processor 12, a CD writer 18, a display 14, and a printer 16. The processor may be a PC of the type that incorporates a CD reader 13, a keyboard 15, a sound source 26 and a locator 28. The locator 28, in the most popular version is a mouse, but it could be a digitizing tablet, light pen, or touch screen. A customer 22 select a video game comprised of one or more discs which are capable of personalization and brings the discs to the personalization apparatus shown in Figure. 1. A disc is inserted into the writer 18 and the customer 22 is positioned by an operator in front of a background 24. Then, the images (different poses) of the customer 22 are captured by the image capture device 20 (such as an electronic camera) in front of a background, such as a blue matte screen 24. The background should be chosen so as to facilitate image segmentation of the captured image into facial and background regions. These images can then be processed and displayed on a monitor display screen and/or printed onto appropriate hard copy media (such as thermal media with the Kodak 450 GL thermal printer). In addition, the images can be written onto a CD-ROM disc. This process is described in the patent application cross-referenced above. The present invention extends the functionality of the personalization by providing additional information about images in order to facilitate the use of the images in animation through image warping, morphing and hybridization of the captured personalized images.

After acquiring the personalization images, the operator mediates the acquisition of additional information about the personalization images with the apparatus shown in Figure. 1. The operator will determine the location of various key features of the images captured. For example if the personalization image was a face, then the key features of the face might include the location of center of the eyes, bottom of the chin and center of the ears. These features are located through a variety of means well known to those versed in the art. Those means range from a completely automated system wherein the feature locations are determined by a processor algorithm to a completely manual system wherein the operator selects the feature positions with a locating device such as a touch-screen, light pen or mouse.

It should be understood that additional personalization information could also be recorded as brief audio segments (from scripts for the particular game), text (such as the player's names, birthdays, etc.) or background images (such as favorite location images or images of the town where the store is located). The additional personalization data would augment the standardized facial images and would be automatically integrated into the personalized region of the game media and recorded onto a storage medium such as a CD disc, an EPROM memory game cartridge or on the hard drive of a computer.

Alternately, the personalization information is created in a standard form with different video games being designed to use the same personalization data. In this case, the personalization data would be stored on a storage media separate from the game software, and the video game player would be given access to both the personalization data and the game software data in order to play a personalized video game.

The personalization image files can also be stored in a manner to allow efficient access by the interactive video entertainment processor such as in a multiple-resolution format. An example of a multi-resolution format is the Photo CD Image PAC hierarchical format, as described in "A Planning Guide For Developers", Kodak Photo CD System, May, 1991. The image files of facial images also contain the image feature "key points" as described earlier and as illustrated in Figure 2.

The use of a standard template for many different personalization images is one novel feature of the present invention. A template is indicated by the left-half of the display screen 14 labeled A in Figure 2. One computer-assisted method of locating feature points causes the processor's marker to flash in the template A and a marker to flash at the processor's estimate of the corresponding location in the captured personalized image, labeled B. The operator can then confirm that the location is correct, or the operator can adjust the location through a variety of input means until it is correct. This procedure is followed for all key point markers, and then the data is recorded for writing to the personalized game media. It should be noted that there may be a number of different initial templates for different discs or even types of people. For example, a template for a pinnochio game may require more data for the location of features around the nose. Other templates may be specialized for certain hair styles or the presence of eyeglasses.

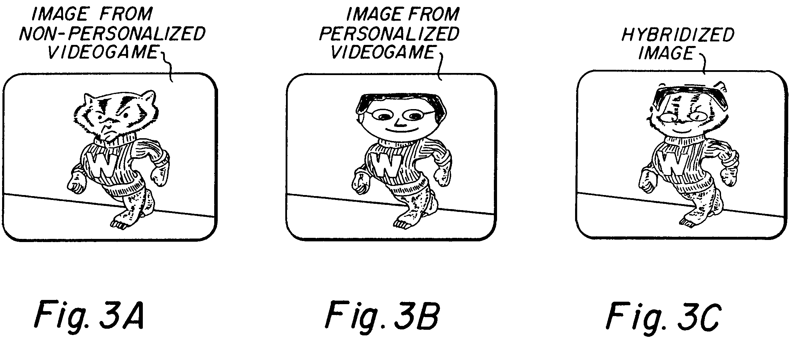

Figure 3A illustrates the non-personalized (standard) image with out modification by the techniques of the present invention. Figure 3B illustrates the personalized character with a portrait head of, for example the game player, and Figure 3C illustrates a hybridized version of the character with a standard head combined with a personalized head.

Portrait images and their associated key feature points comprise the raw data required by the interactive video entertainment system for it to animate personalized or hybridized characters. It is the intent of the present invention to provide an image and feature data base to enable personalized animation in an interactive video entertainment system. These animation techniques, for a given image data base, are based on image warping and metamorphosis techniques, more commonly known as "morphing", as described in the background section of this disclosure. The recording of the motion sequences of key points measured from "human actors" is a means for animating feature points to be applied by the present invention. This recording technology creates demand for the template data and images described by the present invention. The "Detailed Description Of The Invention" demonstrates its usefulness in providing a means for the consumer to supply the needed data to make themselves the animated character.

While there has been shown what is considered to be the preferred embodiment of the invention, it will be manifest that many changes and modifications may be made therein without departing from the essential spirit of the invention. It is intended, therefore, in the annexed claims, to cover all such changes and modifications as may fall within the true scope of the invention.

### Parts List:

10 Apparatus Embodiment
12 Processor
13 CD Reader
14 Display
15 Keyboard
16 Printer
18 CD Writer
20 Image Capture Device
22 Customer
24 Blue Matte Background
26 Sound Source
28 Locator

## Claims

1. A method for standardizing images for video games and the like comprising the steps of:
a) forming a template of a standard video character;
b) forming a personalized image;
c) locating corresponding feature points in the personalized image with corresponding template feature points;
d) storing the locations of corresponding feature points and associated personalized image; and
e) repeating steps a through d for each standard video character and personalized image.

2. The method according to Claim 1 and further comprising the steps of:
forming an animation of the template feature points.

3. The method according to Claim 1 and further comprising the step of recording the locations of the corresponding feature points and associated personalized images to a portable storage media.

4. The method according to Claim 1 and further comprising the step of utilizing the stored feature points and personalized data in conjunction with an authored software to display the personalized image when called for by the authored software.

5. The method according to Claim 1 and further comprising the step of:
combining a personalized image with one or more other images to form a new personalized image.

6. A system for standardizing images for video games and the like comprising:
means for forming a template of a standard video character;
means for forming a personalized image;
means for locating corresponding feature points in the personalized image with corresponding template feature points; and
means for storing the locations of corresponding feature points and associated personalized image.

7. The system according to Claim 10 wherein said means for recording the locations of the corresponding feature points and associated personalized images is a portable storage media.

8. The system according to Claim 10 and further comprising, means for utilizing the stored feature points and personalized data in conjunction with an authored software to display the personalized image when called for by the authored software.

9. The system according to Claim 10 and further comprising:
means for combining personalized images with one or more other images to form a new personalized image.

10. A system for standardizing personalized images for video games and the like comprising:
means for forming a collection of templates corresponding to a standard video character;
means for forming a personalized image;
means for selecting a template from the collection of templates appropriate for the personalized image;
means for locating corresponding feature points in the personalized image with corresponding template feature points; and
means for storing the template selected, locations of corresponding feature points, and associated personalized image.

11. An interactive video entertainment system comprising :
a) interactive video entertainment means ; and
b) storage means that can be accessed by said interactive video entertainment means, said storage means including :
i) data representative of personalized images of standard video characters ; and
ii) data representative of the location of feature points derived from a template corresponding to each of said standard video characters.

12. A storage unit to be used in an interactive video entertainment system, said storage unit including :
i) data representative of personalized images of standard video characters ; and
ii) data representative of the location of feature points derived from a template corresponding to each of said standard video characters.
